# EUROPÄISCHE PATENTSCHRIFT

(11) **EP 0 567 461 B1**
(45) Veröffentlichungstag und Bekanntmachung des Hinweises auf die Patenterteilung: **26.10.1994**
(21) Anmeldenummer: 92900013.1
(22) Anmeldetag: 04.12.1991
(51) Int. Cl.: F16D 65/092, F16D 65/097, F16D 65/84

(54) **BREMSKLOTZ FÜR SCHEIBENBREMSEN**
BRAKE PAD FOR DISC BRAKES
PLAQUETTE POUR FREINS A DISQUE

(30) Priorität: 21.01.1991 DE 4101599; 22.06.1991 DE 4120631
(43) Veröffentlichungstag der Anmeldung: 03.11.1993
(73) Patentinhaber: ITT Automotive Europe GmbH, 60488 Frankfurt (DE)
(72) Erfinder: WEILER, Rolf, D-6239 Eppstein 2 (DE); THIEL, Rudolf, D-6000 Frankfurt/M. 90 (DE); STÖRZEL, Karl, D-6072 Dreieich (DE); BACH, Uwe, D-6272 Niedernh.-Oberjosbach (DE); DREILICH, Ludwig, D-6232 Bad Soden 3 (DE); WÖRSDÖRFER, Karl-Fr., D-6501 Budenheim (DE); BIERÄUGEL, Dieter, D-6203 Hochheim (DE); SHIN, Sang-Cheal, D-6050 Offenbach (DE)
(74) Vertreter: Portwich, Peter
(86) Internationale Anmeldenummer: EP9102310
(87) Internationale Veröffentlichungsnummer: WO9213210

(56) Entgegenhaltungen:
- EP-A- 0 224 988
- DE-U- 8 533 587
- DE-U- 9 000 489
- US-A- 4 513 844
- US-A- 4 836 339
- US-A- 4 846 312

## Beschreibung

Die Erfindung betrifft einen Bremsklotz für Scheibenbremsen mit einem auf der Rückseite der Belagträgerplatte befestigten Dämpfungsblech gemäß dem Oberbegriff des Patentanspruchs 1.

Es ist bekannt, daß Bremsgeräusche, insbesondere Quietschen unterdrückt werden können, indem man an der Rückseite der Belagträgerplatte eines Bremsklotzes ein Dämpfungsbelch befestigt. Ein solches Blech eignet sich auch zur Wärmeisolierung des an die Rückseite der Belagträgerplatte angedrückten Kolbens einer hydraulischen Betätigungsvorrichtung gegenüber dem heißen Bremsklotz, um insbesondere die Hydraulikflüssigkeit vor Überhitzung und Blasenbildung zu schützen. Ein solches Dämpfungsblech wird im allgemeinen auf die Rückseite der Belagträgerplatte aufgeklebt. Diese Befestigungsart hat jedoch den Nachteil, daß sich das Dämpfungsblech bei großer Beanspruchung der Bremse verdrehen kann oder verrutscht.

Bei einem aus der US-PS 4,846,312 bekannten Bremsklotz ist deswegen eine Verdrehsicherung vorgesehen. Die Belagträgerplatte weist Löcher auf, in die entsprechend geformte Abschnitte des Dämpfungsblechs eingreifen. Das Dämpfungsblech wird aber immer noch durch eine Klebung gehalten. Die Gefahr des Herausfallens oder Verklemmens ist dabei noch nicht gebannt. Ein weiterer Nachteil besteht darin, daß für die Ausgestaltung des Dämpfungsblechs und der Belagträgerplatte zusätzliche Fertigungskosten anfallen, die Kosten für die Klebung jedoch nicht eingespart werden.

Es ist weiterhin bekannt, das Dämpfungsblech an der Belagträgerplatte durch Nieten zu befestigen. Die Nietverbindungen haben aber den Nachteil, daß sie sehr fest sind. Wie die Praxis zeigt, führen fertigungstechnische Toleranzen oder die unterschiedliche Wärmeausdehnung von Dämpfungsblech und Belagträgerplatte bei einem erhitzten Bremsklotz dazu, daß sich das Dämpfungsblech aufwölbt und nicht mehr glatt anliegt. Dadurch wiederum werden die Geräuschdämpfungseigenschaften verschlechtert.

Ausgehend von diesen Problemen gibt es bereits Vorschläge zur Abhilfe im Stand der Technik. Beispielsweise ist aus der EP 0224988 A1 bekannt, im Dämpfungsblech Schlitze vorzusehen, wodurch bei starrer Nietbefestigung mechanische Verspannungen ausgeglichen werden können und ein Aufwölben des Dämpfungsblechs verhindert wird. Diese Maßnahme ist jedoch im Hinblick auf Festigkeit und Zusammenhalt des Dämpfungsblechs und auf den Fertigungsaufwand noch nicht optimal.

Es ist daher die Aufgabe der Erfindung, eine hinsichtlich der Dämpfungseigenschaften verbesserte Befestigung des Dämpfungsblechs an der Rückenplatte anzugeben, wobei die genannten Nachteile von Klebe- oder Nietverbindungen vermieden werden.

Die Lösung der Aufgabe ergibt sich aus dem kennzeichnenden Teil des Patentanspruchs 1. Erfindungsgemäß besteht die Befestigung aus einer Art Nietung, durch die das Dämpfungsblech mit Spiel an der Belagträgerplatte verankert ist. Dazu wird die Belagträgerplatte an den Befestigungsstellen lediglich verformt.

Die Anordnung der Nietstellen erfolgt unter besonderer Berücksichtigung der Flächenbereiche des Bremsklotzes, an denen der Bremskolben oder der Bremssattel beim Bremsen zur Übertragung von Zuspannkräften nicht anliegen.

Die beschriebenen Maßnahmen verursachen nur geringe Fertigungskosten. Ein derart verankertes Dämpfungsblech kann sich weder verdrehen noch herausfallen und ist aufgrund des erfindungsgemäßen Spiels auch gegen Aufwölben gesichert, so daß es unter allen Umständen eben an der Rückenplatte anliegt. Zur Befestigung wird kein separates Teil wie z.B. ein Niet benötigt.

Vorteilhafte Ausgestaltungsformen der Erfindung sind in den Unteransprüchen beschrieben, wobei die Ausführungsformen gemäß Anspruch 2 bis 4 speziell für einen Bremsklotz bestimmt sind, der in einer Schwimmsattel-Teilbelagscheibenbremse direkt vom Bremskolben betätigt wird, während sich Anspruch 5 auf einen indirekt vom Schwimmsattel betätigten Bremsklotz bezieht, der auf der dem Bremskolben gegenüberliegenden Axialseite des Schwimmsattels angeordnet ist.

Um eine ebene Anlage des Dämpfungsblechs an der Rückseite der Belagträgerplatte zu gewährleisten, sollten mindestens zwei Befestigungsstellen vorgesehen sein, die gemäß Anspruch 2 im äußeren Randbereich der Belagträgerplatte gegenüberliegend angeordnet sind. Befestigungspunkte im äußeren Randbereich sind besonders wichtig, da das Dämpfungsblech hier normalerweise nicht vom Kolben der hydraulischen Betätigungsvorrichtung angedrückt wird. Ergänzend dazu kann gemäß Anspruch 3 ein weiterer Befestigungspunkt im mittleren Bereich der Belagträgerplatte angeordnet sein. Neben einer verbesserten Befestigung des Dämpfungsblechs könnte mit Vorteil an diesem Verankerungspunkt gleichzeitig eine Feder befestigt werden, die zur Halterung des kolbenseitigen Bremsklotzes am Kolben der hydraulischen Betätigungsvorrichtung dient.

Bei der Herstellung eines erfindungsgemäßen Bremsklotzes werden die äußeren Enden der zur Befestigung dienenden Vorsprünge beispielsweise mittels einer Taumelnietung verbreitert. Dadurch kann der Grad der Verformung der äußeren Enden sehr genau bestimmt werden, wobei auch darauf geachtet wird, daß das Dämpfungsblech mit einer ganz bestimmten Andruckkraft, die für eine Serie von zu fertigenden Bremsklötzen hinsichtlich der Dämpfungseigenschaften als optimal ermittelt wurde, gegen die Belagträgerplatte gespreßt wird.

Für einen indirekt vom Schwimmsattel andrückbaren Bremsklotz wird eine Ausführungsform gemäß Anspruch 5 empfohlen. Da dieser Bremsklotz mit seinen in Umfangsrichtung der Bremsscheibe äußeren Bereichen am Schwimmsattel anliegt, sind die beiden Befestigungsstellen im mittleren Bereich des Bremsklotzes und im Bereich einer Ausnehmung des Schwimmsattels vorgesehen.

Die zur Befestigung des Dämpfungsblechs vorgesehenen Vorsprünge der Bremsklötze sind gemäß Anspruch 6 aus der Belagträgerplatte herausgeformt, wodurch gegenüber einer herkömmlichen Nietung Material- und Fertigungskosten eingespart werden.

In einer bevorzugten Ausführungsform gemäß Anspruch 7 besteht das Dämpfungsblech aus Stahlblech und ist mit Gummi beschichtet.

Ausführungsbeispiele der Erfindung werden nachfolgend anhand der Zeichnungen näher erläutert.

Es zeigen:
- Fig. 1: ein Dämpfungsblech in einer ersten Ausführungsform,
- Fig. 2: eine Belagträgerplatte in einer ersten Ausführungsform,
- Fig. 3: einen Bremsklotz in einer ersten Ausführungsform,
- Fig. 4: ein Dämpfungsblech in einer weiteren Ausführungsform,
- Fig. 5: eine Belagträgerplatte in einer weiteren Ausführungsform,
- Fig. 6: einen Bremsklotz in einer weiteren Ausführungsform,
- Fig. 7: einen Schnitt gemäß Linie D-D von Fig. 5.

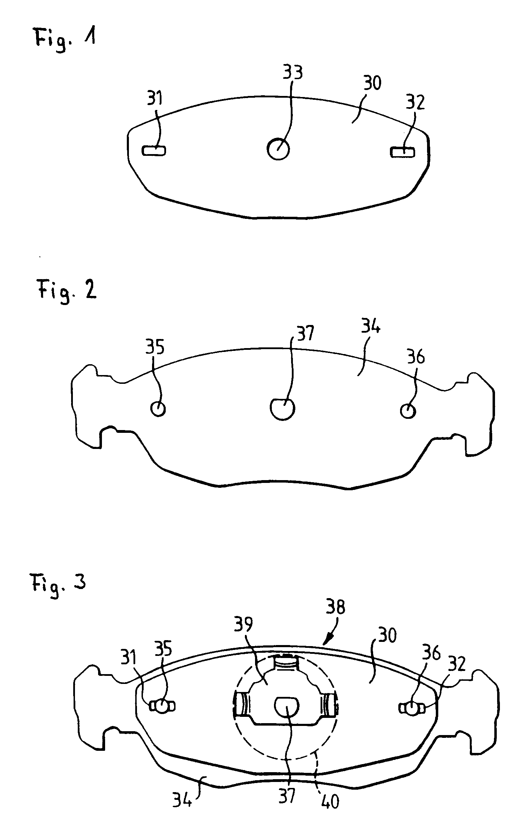

Ein Ausführungsbeispiel der Erfindung ist in den Fig. 1 bis 3 dargestellt. Ein Dämpfungsblech 30 ist mit Langlöchern 31,32 versehen, die in den äußeren Randbereichen in Umfangsrichtung der nicht gezeigten Bremsscheibe gegenüberliegend angeordnet sind. Die Längsausdehnung der beiden Langlöcher 31,32 verläuft in Richtung ihrer Verbindungslinie. Im mittleren Bereich des Dämpfungsblechs 30 ist ein drittes, kreisrundes Loch 33 vorgesehen. Eine Belagträgerplatte 34 ist in den in Umfangsrichtung liegenden Randbereichen ihrer Rückseite mit zwei kreisrunden Vorsprüngen 35,36 und in ihrem mittleren Bereich mit einem dritten, im Querschnitt D-förmigen Vorsprung 37 versehen.

Beim fertigen Bremsklotz 38 ist das Dämpfungsblech 30 auf der Rückseite der Belagträgerplatte 34 befestigt, wobei der D-förmige Vorsprung 37 durch das dritte Loch 33 und die beiden kreisrunden Vorsprünge 35,36 durch die Langlöcher 31,32 ragen. Fertigungstechnisch bedingte Maßtoleranzen werden durch die Langlöcher 31,32 ausgeglichen, so daß das Dämpfungsblech 30 nach dem Vernieten der Vorsprünge 35,36 an der Belagträgerplatte 34 eben anliegt. Der D-förmige Vorsprung 37 ragt durch eine ebenfalls D-förmige Öffnung einer Haltefeder 39. Die Haltefeder 39 ist mit dem Vorsprung 37 vernietet, wodurch sie verdrehsicher befestigt ist.

Der Bremsklotz 38 ist zur Verwendung in einer Schwimmsattel-Scheibenbremse bestimmt, und zwar für diejenige Axialseite, die einen im Bremszylinder gleitenden Bremskolben aufweist. Dabei greift die Haltefeder 39 in den durch die Strichelung 40 angedeuteten Innenraum des am Bremsklotz 38 direkt anliegenden, hohlen Bremskolbens ein.

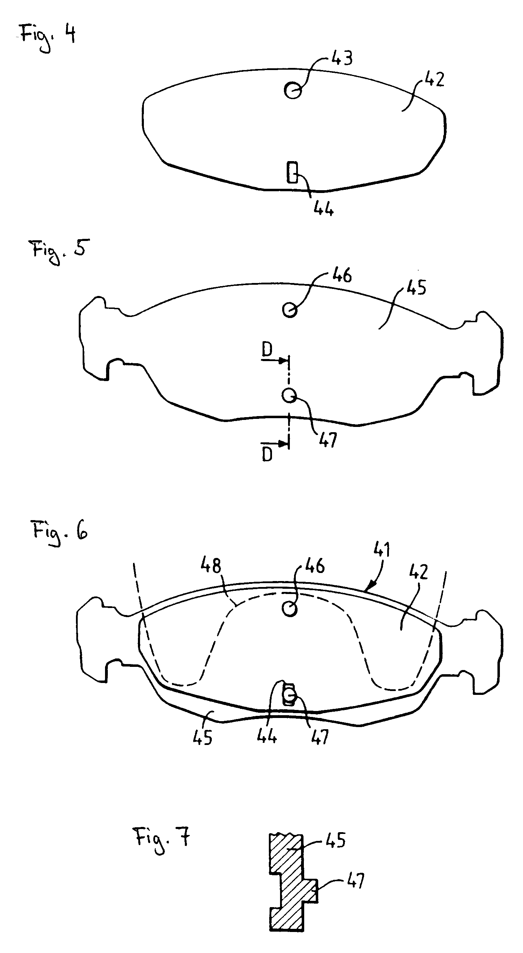

Ein weiteres, in den Fig. 4 bis 6 dargestelltes Ausführungsbeispiel betrifft einen anderen Bremsklotz 41, der in derselben Schwimmsattel-Scheibenbremse zur Verwendung auf der anderen, dem Bremskolben gegenüberliegenden Axialseite bestimmt ist.

Das Dämpfungsblech 42 ist hier mit einem kreisrunden Loch 43 und einem Langloch 44 versehen. Die beiden Löcher 43,44 sind in radialer Richtung der nicht gezeigten Bremsscheibe beiderseits der Mitte des Dämpfungsblechs 42 gegenüberliegend angeordnet. Die Belagträgerplatte 45 ist mit zwei entsprechend angeordneten, kreisrunden Vorsprüngen 46,47 versehen, mit denen das Dämpfungsblech 42 angenietet ist. Der Maßtoleranzausgleich erfolgt durch das Langloch 44, wodurch eine ebene Anlage des Dämpfungsblechs 42 gewährleistet ist.

Im eingebauten Zustand liegt der Bremsklotz 41 an dem durch die Strichelung 48 angedeuteten Schwimmsattel an. Dabei greifen zwei Finger des Schwimmsattels über die Rückseite des Bremsklotzes 41 und über das Dämpfungsblech 42. Die Vorsprünge 46,47 sind so angeordnet, daß sie in einer Ausnehmung des Schwimmsattels zwischen den beiden Fingern liegen, wo sie nicht stören.

Die zur Befestigung der Dämpfungsbleche 30,42 und der Haltefeder 39 dienenden Vorsprünge 35,36,37,46,47 sind, wie in Fig. 7 beispielhaft dargestellt, aus den Belagträgerplatten 34,45 herausgeformt.

## Patentansprüche

1. Bremsklotz für eine Teilbelagscheibenbremse, mit einer Belagträgerplatte (34, 35), die auf ihrer Vorderseite mit einem zum Andruck an eine Bremsscheibe bestimmten Reibbelag versehen ist und auf deren Rückseite ein Dämpfungsblech (30, 42) befestigt ist, das zur Geräuschdämpfung und/oder Wärmeisolierung dient, mit zwei auf der Rückseite der Belagträgerplatte (34, 45) im Abstand zueinander angeordneten Vorsprüngen (35, 36 oder 46, 47), die sich in zwei zugehörige Löcher (31, 32 oder 43, 44) des Dämpfungsblechs (30, 42) erstrecken, wobei das Dämpfungsblech (30, 42) an der Belagträgerplatte (34, 45) durch Vernieten der beiden Vorsprünge (35, 36 oder 46, 47) befestigt ist, dadurch **gekennzeichnet**, daß die Vorsprünge (35, 36 oder 46, 47) im Randbereich der Belagträgerplatte (34, 45) und im Abstand zu den für die Übertragung von Zuspannkräften vorgesehenen Bereichen angeordnet sind, daß mindestens eines der Löcher (31, 32 oder 43, 44) ein Langloch (31, 32, 44) ist, dessen Längsausdehnung in Richtung der Verbindungslinie zwischen den beiden Löchern (31, 32 oder 43, 44) verläuft, und daß die durch das Vernieten erzeugte Andruckkraft eine geringfügige Parallelverschiebung des Dämpfungsblechs (30, 42) gegenüber der Belagträgerplatte (34, 45) erlaubt.

2. Bremsklotz nach Anspruch 1, dadurch **gekennzeichnet**, daß zwei Vorsprünge (35, 36) im wesentlichen kreisförmige Querschnitte aufweisen und in äußeren Randbereichen der Belagträgerplatte (34) in Umfangsrichtung der Bremsscheibe gegenüberliegend angeordnet sind.

3. Bremsklotz nach Anspruch 2, dadurch **gekennzeichnet**, daß im mittleren Bereich der Belagträgerplatte (34) ein dritter Vorsprung (37) angeordnet ist, der durch ein drittes Loch (33) des Dämpfungsblechs (30) ragt und an dem eine Haltefeder (39) aus Federblech vernietet ist.

4. Bremsklotz nach Anspruch 3, dadurch **gekennzeichnet**, daß der dritte Vorsprung (37) einen D-förmigen Querschnitt aufweist und durch eine D-förmige Öffnung der Haltefeder (39) ragt.

5. Bremsklotz nach Anspruch 1, dadurch **gekennzeichnet**, daß zwei Vorsprünge (46, 47) im wesentlichen kreisförmige Querschnitte aufweisen und in äußeren Randbereichen der Belagträgerplatte (45) in radialer Richtung der Bremsscheibe, beiderseits der Bremsklotzmitte gegenüberliegend angeordnet sind.

6. Bremsklotz nach einem der vorhergehenden Ansprüche, dadurch **gekennzeichnet**, daß die Vorsprünge (35, 36, 37, 46, 47) aus der Belagträgerplatte (34, 45) herausgeformt sind.

7. Bremsklotz nach einem der vorhergehenden Ansprüche, dadurch **gekennzeichnet**, daß das Dämpfungsblech (30, 42) aus Stahlblech besteht und mit Gummi beschichtet ist.

## Claims

1. A brake shoe for a spot-type disc brake, including a lining carrier plate (34, 35) which is provided on its front side with a friction lining being intended to be urged against a brake disc and on whose reverse a damping plate (30, 42) is fixed which serves for noise abatement and/or for heat insulation, with two projections (35, 36 or 46, 47) which are arranged on the reverse of the lining carrier plate (34, 45) at a distance from each other and which extend into two associated holes (31, 32 or 43, 44) of the damping plate (30, 42), the damping plate (30, 42) being secured to the lining carrier plate (34, 45) by riveting of the two projections (35, 36 or 46, 47),
**characterized** in that the projections (35, 36 or 46, 47) are arranged in the marginal range of the lining carrier plate (34, 45) and spaced from the areas provided for transmitting clamping forces, in that at least one of the holes (31, 32 or 43, 44) is an oblong hole (31, 32, 44) whose longitudinal extension runs in the direction of the connecting line between the two holes (31, 32 or 43, 44), and in that the pressing force generated by riveting permits a slight parallel shift of the damping plate (30, 42) in relation to the lining carrier plate (34, 45).

2. A brake shoe as claimed in claim 1,
**characterized** in that two projections (35, 36) have substantially circular cross-sections and are positioned in external marginal ranges of the lining carrier plate (34), opposite each other in circumferential direction of the brake disc.

3. A brake shoe as claimed in claim 2,
**characterized** in that in the centre range of the lining carrier plate (34) a third projection (37) is positioned which projects through a third hole (33) of the damping plate (30) and to which a retaining spring (39) of spring sheet is riveted.

4. A brake shoe as claimed in claim 3,
**characterized** in that the third projection (37) has a D-shaped cross section and projects through a D-shaped opening of the retaining spring (39).

5. A brake shoe as claimed in claim 1,
**characterized** in that two projections (46, 47) have substantially circular cross sections and are positioned in external marginal ranges of the lining carrier plate (45), opposite each other in radial direction of the brake disc, on either side of the centre of the brake shoe.

6. A brake shoe as claimed in any one of the preceding claims,
**characterized** in that the projections (35, 36, 37, 46, 47) are moulded out of the lining carrier plate (34, 45).

7. A brake shoe as claimed in any one of the preceding claims,
**characterized** in that the damping plate (30, 42) is made of steel sheet and is coated with rubber.

## Revendications

1. Plaquette de frein pour un frein à disque à garniture partielle, comprenant une plaque support de garniture (34, 35) dont la face frontale est pourvue d'une garniture de frottement destinée à être serrée contre un disque de frein, et sur la face arrière de laquelle est fixée une tôle anti-bruit (30, 42) assurant l'amortissage des bruits et/ou l'isolation thermique, comprenant deux projections (35, 36 ou 46, 47) disposées à une distance l'une de l'autre au dos de la plaque support de garniture (34, 45), faisant saillie dans deux trous associés (31, 32 ou 43, 44) ménagés dans la tôle anti-bruit (30, 42), la tôle anti-bruit (30, 42) étant fixée sur la plaque support de garniture (34, 45) par aplatissement des deux projections (35, 36 ou 46, 47),
caractérisée en ce que les projections (35, 36 ou 46, 47) sont disposées dans la zone marginale de la plaque support de garniture (34, 45) et à une distance par rapport aux zones destinées à transmettre les forces de serrage, en ce que l'un au moins des trous (31, 32 ou 43, 44) est un trou oblong (31, 32, 44) dont l'extension longitudinale s'étend dans le sens de la ligne de jonction des deux trous (31, 32 ou 43, 44), et en ce que la force d'appui créée par le rivetage autorise un faible glissement parallèle de la tôle anti-bruit (30, 42) par rapport à la plaque support de garniture (34, 45).

2. Plaquette de frein selon la revendication 1, caractérisée en ce que deux projections (35, 36) ont une section essentiellement circulaire et sont disposées dans des zones marginales extérieures de la plaque support de garniture (34), en étant opposées l'une à l'autre dans le sens de la circonférence du disque de frein.

3. Plaquette de frein selon la revendication 2, caractérisée en ce qu'une troisième projection (37) est disposée dans la zone centrale de la plaque support de garniture (34), cette projection pénétrant dans un troisième trou (33) ménagé dans la tôle anti-bruit (30), et portant un ressort de maintien (39) réalisé en tôle ressort, riveté sur celle-ci.

4. Plaquette de frein selon la revendication 3, caractérisée en ce que la troisième projection (37) présente une section en forme de D et traverse une ouverture en forme de D ménagée dans le ressort de maintien (39).

5. Plaquette de frein selon la revendication 1, caractérisée en ce que deux projections (46, 47) présentent une section essentiellement circulaire et sont disposées dans des zones marginales de la plaque support de garniture (45), dans le sens radial du disque de frein, des deux côtés du centre de la plaquette de frein, en étant opposées l'une à l'autre.

6. Plaquette de frein selon l'une des revendications précédentes, caractérisée en ce que les projections (35, 36, 37, 46, 47) sont élaborées à partir de la plaque support de garniture (34, 35).

7. Plaquette de frein selon l'une des revendications précédentes, caractérisée en ce que la tôle anti-bruit (30, 42) est réalisée en tôle d'acier et est revêtue de caoutchouc.
